(19) **Europäisches Patentamt / European Patent Office / Office européen des brevets**

(11) **EP 2 031 612 A1**

(12) **EUROPEAN PATENT APPLICATION**
published in accordance with Art. 153(4) EPC

(43) Date of publication:
**04.03.2009 Bulletin 2009/10**

(21) Application number: **07743771.3**

(22) Date of filing: **21.05.2007**

(51) Int Cl.:
*H01G 9/058* (2006.01)      *C01B 31/04* (2006.01)

(86) International application number:
**PCT/JP2007/060337**

(87) International publication number:
**WO 2007/145052 (21.12.2007 Gazette 2007/51)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **14.06.2006 JP 2006164993**
**26.04.2007 JP 2007117120**

(71) Applicant: **Calgon Mitsubishi Chemical Corporation**
**Tokyo 104-0031 (JP)**

(72) Inventors:
• **YOSHINO, Yoshio**
  **Tokyo 104-0031 (JP)**
• **I, Akihiro**
  **Tokyo 104-0031 (JP)**
• **TAKEDA, Yoshitaka**
  **Kitakyushu-shi**
  **Fukuoka 806-0004 (JP)**
• **SUZUKI, Mitsuo**
  **Tokyo 104-0031 (JP)**

(74) Representative: **HOFFMANN EITLE**
**Patent- und Rechtsanwälte**
**Arabellastrasse 4**
**81925 München (DE)**

(54) **PHOSPHORUS COMPOUND-COMPLEXED ACTIVATED CARBON FOR ELECTRIC DOUBLE LAYER CAPACITOR AND METHOD FOR PRODUCING THE SAME**

(57) A phosphorus compound-complexed activated carbon capable of easily realizing an electric double layer capacitor having high capacitance per unit volume and excellent durability is provided. A phosphorus compound-complexed activated carbon for an electric double layer capacitor having a phosphorus atom content of 1,000 ppm or more, and 20,000 ppm or less, a BET specific surface area of 1,600 $m^2$/g or more, and 2,200 $m^2$/g or less, an average pore diameter of 1.7 nm or more, and 2.1 nm or less, and a pore volume of pores having pore diameters within the range of 1.4 nm to 2.0 nm calculated by a Cranston-Inkley method of 0.25 $cm^3$/g or more. This phosphorus compound-complexed activated carbon is produced by kneading an activated carbon and phosphoric acid at 130°C to 170°C, conducting molding, and after executing a first heating process in which heating is conducted at 100°C to 230°C, a second heating process in which heating is conducted at 400°C to 600°C, and a steam treatment process in which heating is conducted in a steam atmosphere at 500°C to 900°C, conducting heat treatment in an inert gas atmosphere at 800°C or higher so as to complex a phosphorus compound.

EP 2 031 612 A1

**Description**

Field of the Invention

The present invention relates to a phosphorus compound-complexed activated carbon for an electric double layer capacitor and a method for producing the same.

Background of the Invention

In recent years, developments have been made for still further improving fuel economy and still further cleaning exhaust gases in an automobile field from the viewpoint of a global environmental measure. As for a part of efforts on this development, technical developments of hybrid automobile and electric automobile have been pursued. Regarding these technical developments, commercialization of an electric double layer capacitor for application to a drive system power assist and energy regeneration has been noted. The principle of the electric double layer capacitor is that an electric charge is accumulated in an electric double layer formed at an interface between a polarizable electrode and an electrolytic solution. Therefore, it is an advantage that quick charge and discharge can be conducted at high currents as compared with secondary batteries, e.g., lead acid batteries and nickel hydrogen secondary batteries. As for the material for the polarizable electrode, usually, activated carbon is used from the viewpoint of a large interface and excellent electrical conductivity.

Incidentally, as for the activated carbon containing phosphorus, an activated carbon activated with phosphoric acid is known previously. That is, after a carbonaceous material is impregnated with a chemical agent, for example, phosphoric acid or a phosphate, e.g., sodium phosphate, heat treatment is conducted at a heating temperature of 400°C to 750°C and, thereby, heat treated carbon composed of a well-developed porous body is obtained because of strong dehydrating action of the chemical agent. Since large amounts of phosphate remain in the resulting heat treated carbon, the phosphorus content is reduced by conducting refining repeatedly with hot water while phosphoric acid and the phosphate are recovered so as to produce activated carbon. In general, the thus obtained activated carbon activated with phosphoric acid has a pore distribution including relatively large macropores and, therefore, is favorably used for a canister.

However, since the previously available activated carbon activated with phosphoric acid has a pore distribution including relatively large macropores, a high capacitance for a capacitor cannot be expected.

In US Patent No. 6,043,183, an activated carbon activated with phosphoric acid is subjected to a heat treatment at 900°C to 1,120°C so as to reduce oxygen-containing surface functional groups and, thereby, activated carbon for a capacitor is produced. It is easily predicted that this activated carbon merely has slightly improved durability and the ash content remains high because only water washing is conducted after activation with phosphoric acid. It cannot be said by any means that the durability is satisfactory from the viewpoint of metal impurities. Furthermore, the proportion of mesopores having pore diameters of 2 to 50 nm is 75% or more in the total pores and relatively large macropores are also included. Consequently, the pore distribution itself is not suitable for a capacitor including organic electrolytic solution, and the capacitance per unit volume is smaller than that of previously used coconut shell activated carbon activated with steam.

In US Patent No. 5,905,629, activated carbon activated with phosphoric acid is subjected to a heat treatment at 945°C to 1,120°C so as to reduce oxygen-containing functional groups and, thereby, an activated carbon for an electric double layer capacitor to be used for an aqueous electrolytic solution is produced. Regarding this activated carbon, the proportion of pores having pore diameters of 2 nm or less is 75% or more relative to the whole, the maximum specific surface area in examples is up to 1,520 $m^2$/g, micropores constitute the most part, and the pore distribution includes much micropores suitable for an aqueous electrolytic solution. It can be said that the activated carbon is not suitable for an electric double layer capacitor including an organic electrolytic solution at all.

Therefore, regarding the electric double layer capacitor including the activated carbon activated with phosphoric acid serving as an electrode material, even when oxygen-containing functional groups are reduced by heat-deaeration, merely the durability is improved, and it cannot be said that the capacitance is always satisfactory because of the limited pore distribution. Consequently, there has been no example in which a phosphorus compound has been added intentionally as an electrode material for an electric double layer capacitor in the past.

Furthermore, a polar solvent, e.g., propylene carbonate, is usually used as an electrolytic solution of the electric double layer capacitor. On the other hand, in general, a pore surface of activated carbon, which is composed of carbon, has a high affinity for a nonpolar solvent, and it cannot be said that the wettability with an electrolytic solution by using a polar solvent is always satisfactory.

As for a method for improving the affinity of the activated carbon surface for a polar solvent, a method in which activated carbon is provided with oxygen-containing functional groups is mentioned. However, under present circumstances, oxygen-containing functional groups on an activated carbon surface cause impairment of the durability of a capacitor. Therefore, oxygen-containing functional groups are usually removed by a heat deaeration treatment before the use.

For this reason, an activated carbon having a surface property with an enhanced affinity for a nonaqueous electrolytic solution serving as a polar solvent and being capable of performing a function even in the inside of pores without impairing the durability of a capacitor has not been provided in the past.

Patent Document 1: US Patent No. 6,043,183
Patent Document 2: US Patent No. 5,905,629

Disclosure of the Invention

It is an object of the present invention to provide a phosphorus compound-complexed activated carbon capable of easily realizing an electric double layer capacitor having a high capacitance per unit volume and excellent durability. A phosphorus compound-complexed activated carbon for an electric double layer capacitor according to the present invention is the activated carbon which is used for an electric double layer capacitor and which is formed by complexing a phosphorus compound, wherein the phosphorus atom content in the phosphorus compound-complexed activated carbon is 1,000 ppm or more, and 20,000 ppm or less, the BET specific surface area is 1,600 $m^2$/g or more, and 2,200 $m^2$/g or less, the average pore diameter is 1.7 nm or more, and 2.1 nm or less, and the pore volume of pores having pore diameters within the range of 1.4 nm to 2.0 nm calculated by a Cranston-Inkley method is 0.25 $cm^3$/g or more. This phosphorus compound-complexed activated carbon for an electric double layer capacitor is produced by the process of kneading an activated carbon raw materials and phosphoric acid so as to prepare a mixture, heating the mixture at 400°C to 600°C in a heating process, and heat treating the heated mixture in an inert gas atmosphere at 800°C or higher so as to complex the activated carbon and a phosphorus compound in a heat treatment process. This phosphorus compound-complexed activated carbon for an electric double layer capacitor is also produced by the process of kneading an activated carbon raw material and phosphoric acid at 130°C to 170°C so as to prepare a mixture, molding the mixture so as to prepare a molded product, heating the molded product at 100°C to 230°C in a first heating process, heating the molded product, which has heated in the first heating process, at 400°C to 600°C in a second heating process, and heat treating the molded product, which has heated in the second heating process, in an inert gas atmosphere at 800°C or higher so as to complex the activated carbon and a phosphorus compound in a heat treatment process.

Detailed description

In order to solve the above-described problems, the present inventors conducted intensive research. As a result, it was found that a phosphorus compound-complexed activated carbon, which was produced by kneading an activated carbon or an activated carbon raw material and phosphoric acid and conducting a stepwise heat treatment so as to complex a phosphorus compound and the activated carbon, had optimum pore distribution, specific surface area, surface property, and electrochemical characteristics and, thereby, the capacitance per unit volume increased.

A first aspect is a phosphorus compound-complexed activated carbon for an electric double layer capacitor, the activated carbon characterized by being used for an electric double layer capacitor and being formed by complexing a phosphorus compound, wherein the phosphorus atom content in the phosphorus compound-complexed activated carbon is 1,000 ppm or more, and 20,000 ppm or less, the BET specific surface area is 1,600 $m^2$/g or more, and 2,200 $m^2$/g or less, the average pore diameter is 1.7 nm or more, and 2.1 nm or less, and the pore volume of pores having pore diameters within the range of 1.4 nm to 2.0 nm calculated by a Cranston-Inkley method is 0.25 $cm^3$/g or more.

A second aspect is the phosphorus compound-complexed activated carbon for an electric double layer capacitor according to the first aspect, the activated carbon characterized in that the electric double layer capacitor is an electric double layer capacitor including a nonaqueous electrolytic solution.

A third aspect is the phosphorus compound-complexed activated carbon for an electric double layer capacitor according to the first or the second aspect, wherein the activated carbon is produced from a wood based raw material.

A fourth aspect is the phosphorus compound-complexed activated carbon for an electric double layer-capacitor, according to any one of the first to the third aspects, wherein the ash content is 3.0 percent by weight or less.

A fifth aspect is a method for producing the phosphorus compound-complexed activated carbon for an electric double layer capacitor according to any one of the first to fourth aspects, the method characterized by kneading an activated carbon and phosphoric acid and after executing a heating process in which heating is conducted at 400°C to 600°C, conducting heat treatment in an inert gas atmosphere at 800°C or higher so as to complex the activated carbon and a phosphorus compound.

A sixth aspect is a method for producing the phosphorus compound-complexed activated carbon for an electric double layer capacitor according to any one of the first to fourth aspects, the method characterized by kneading an activated carbon raw material and phosphoric acid at 130°C to 170°C, conducting molding, and after executing a first heating process in which heating is conducted at 100°C to 230°C and a second heating process in which heating is conducted at 400°C to 600°C, conducting heat treatment in an inert gas atmosphere at 800°C or higher so as to complex the activated carbon and a phosphorus compound.

A seventh aspect is the method for producing the phosphorus compound-complexed activated carbon for an electric double layer capacitor, according to the fifth or the sixth aspect, the method characterized in that after the heating process at 400°C to 600°C, a steam treatment process in which heating is conducted in a steam atmosphere at 500°C to 900°C is executed and subsequently, heat treatment in an inert gas atmosphere at 800°C or higher is conducted so as to complex the activated carbon and a phosphorus compound.

An eighth aspect is an electric double layer capacitor including the phosphorus compound-complexed activated carbon according to any one of the first to fourth aspects.

According to the present invention, an electric double layer capacitor having a high capacitance per unit volume and excellent durability can be provided.

That is, regarding the electric double layer capacitor in which the phosphorus compound-complexed activated carbon according to the present invention satisfying the properties specified in the present invention is used as a polarizable electrode material, the bulk density of the activated carbon is high, a high proportion of pores having pore diameters of 1.4 to 2.0 nm most suitable for the electric double layer capacitor including a nonaqueous electrolytic solution are included, and a large capacitance can be expected. Furthermore, a phosphorus compound, in particular a high polymer of polyphosphoric acid or phosphorus oxide, is complexed with the activated carbon and is fixed to the inside of carbonaceous porous body firmly. Therefore, by the action of highly hygroscopic phosphorus oxide or polyphosphoric acid fixed to the activated carbon, the phosphorus compound-complexed activated carbon according to the present invention becomes a porous body having a surface property which exhibits a high affinity for a polar solvent even in the inside of pores.

That is, as described above, the nonaqueous electrolytic solution used in the electric double layer capacitor is a polar solvent, e.g., propylene carbonate. Therefore, it is believed that if the above-described phosphorus compound-complexed activated carbon exhibiting a high affinity for the polar solvent is employed, the affinity for these electrolytic solutions is improved, even the inside of pores of the phosphorus compound-complexed activated carbon is impregnated with the electrolytic solution satisfactorily and, thereby, a large capacitance is realized because pores contribute to the capacitance effectively.

Furthermore, in general, moisture easily incorporates into an electrolytic solution which is a nonaqueous electrolytic solution, e.g., propylene carbonate, and the electric double layer capacitor has a serious problem in that the durability deteriorates because of moisture contamination. Therefore, under the present circumstances, consideration is given to the state of storage of the electrolytic solution, capacitor assembling process, and the like in such a way as to minimize moisture mixed into the electrolytic solution. On the other hand, it is believed that the phosphorus compound-complexed activated carbon according to the present invention can reduce the moisture in the electrolytic solution and contribute to an improvement of the durability of the electric double layer capacitor because highly hygroscopic polyphosphoric acid or phosphorus oxide is complexed with the activated carbon and trace moisture in the electrolytic solution can be removed by adsorption.

Moreover, the phosphorus compound-complexed activated carbon according to the present invention has advantages that the productivity and cost-effectiveness are excellent since an inexpensive wood based raw material can be used as compared with those of the activated carbon produced by using an expensive synthetic resin, e.g., a phenol resin, as a raw material or the activated carbon activated by a costly alkali, e.g., potassium hydroxide, because of production process constraints.

The embodiments of the phosphorus compound-complexed activated carbon for an electric double layer capacitor and the method for producing the same according to the present invention will be described below in detail.

[Phosphorus compound-complexed activated carbon for an electric double layer capacitor]

The phosphorus compound-complexed activated carbon for an electric double layer capacitor according to the present invention is produced by complexing activated carbon and a phosphorus compound. The phosphorus atom content in the phosphorus compound-complexed activated carbon is 1,000 ppm or more, and 20,000 ppm or less. The BET specific surface area is 1,600 $m^2$/g or more, and 2,200 $m^2$/g or less. The average pore diameter is 1.7 nm or more, and 2.1 nm or less. In addition, the pore volume of pores having pore diameters within the range of 1.4 nm to 2.0 nm calculated by the Cranston-Inkley method is 0.25 $cm^3$/g or more. Preferably, the activated carbon is produced from a wood based raw material.

<Phosphorus atom content>

As described above, the phosphorus compound is complexed with the activated carbon and, as a result, the phosphorus compound-complexed activated carbon according to the present invention has a high affinity for a polar solvent. However, if the phosphorus atom content is too large, pores are filled, and unfavorably, pores effective at serving as the electric double layer capacitor are reduced, so that the capacitance is reduced significantly. Therefore, the phosphorus atom content in the phosphorus compound-complexed activated carbon according to the present invention is 1,000 ppm or more, preferably 2,000 ppm or more, and more preferably 3,000 ppm or more, and 20,000 ppm or less, preferably 15,000 ppm or less, and more preferably 10,000 ppm or less.

<BET specific surface area>

If the specific surface area of the phosphorus compound-complexed activated carbon is too large, the bulk density decreases and the capacitance per unit volume decreases. However, if the specific surface area is too small, the capacitance per unit volume also decreases. Therefore, the BET specific surface area (BET surface area determined by the BET method on the basis of a nitrogen adsorption method) is 1,600 $m^2/g$ or more, preferably 1,620 $m^2/g$ or more, and 2,200 $m^2/g$ or less, preferably 2,170 $m^2/g$ or less.

<Average pore diameter>

It is necessary that the phosphorus compound-complexed activated carbon according to the present invention has an average pore diameter of 1.7 nm or more, and 2.1 nm or less. If the average pore diameter is too small, effective pores are reduced, and the capacitance per unit volume decreases. Furthermore, if the average pore diameter is too large, the bulk density decreases, and the capacitance per unit volume decreases.

<1.4 to 2.0 nm pore volume>

It is necessary that the phosphorus compound-complexed activated carbon according to the present invention has a pore volume of pores having pore diameters within the range of 1.4 nm to 2.0 nm (hereafter referred to as a "1.4 to 2.0 nm pore volume") calculated by the Cranston-Inkley method is 0.25 $cm^3/g$ or more. The upper limit of the 1.4 to 2.0 nm pore volume is not specifically limited, but usually, 0.5 $cm^3/g$ or less is preferable.
The pores having diameters of 1.4 nm to 2.0 nm are pores having pore diameters most suitable for the electric double layer capacitor including a nonaqueous electrolytic solution. Therefore, regarding the use for the electric double layer capacitor, it is very important to increase the pore volume per unit volume.
By the way, the phosphorus atom content in the phosphorus compound-complexed activated carbon, the BET specific surface area, the average pore diameter, and the 1.4 to 2.0 nm pore volume can be measured by methods described in the item of Examples, as described later.

<Ash>

Preferably, the amount of ash in the phosphorus compound-complexed activated carbon according to the present invention is 3.0 percent by weight or less, and more preferably 2.7 percent by weight or less from the viewpoint of metal impurities having an influence on the durability.
The measurement of the amount of ash in the phosphorus compound-complexed activated carbon can be conducted by the following method.
An activated carbon raw material is put into a chinaware crucible, and heating is conducted in the air at 815°C for 5 hours or more. After cooling, the mass of the remaining ash is measured, and the weight percentage relative to the amount of activated carbon put into the crucible is determined and taken as the amount of ash. If the amount of activated carbon sample put into the crucible is too large, ashing is not completed within a specified time, and the amount of ash is overestimated, so that caution is required.

[Activated carbon raw material]

As for the activated carbon raw material for the phosphorus compound-complexed activated carbon according to the present invention, an inexpensive wood based raw material is preferable. The wood based raw material is not specifically limited insofar as the raw material is a carbon raw material which can be activated by chemicals. Examples thereof include plants, e.g., hardwood, softwood, wood waste thereof, ears of corn, coffee beans, rice hull, seeds of fruit, and hull of fruit, molasses, wreckage of lignin and the like, coal, tar, pitch, and petroleum residue. Among them, cellulose based raw materials, e.g., wood based powder, are preferable, because moisture contained in the raw material is easy to dehydrate.

[Method for producing phosphorus compound-complexed activated carbon for electric double layer capacitor]

The phosphorus compound-complexed activated carbon for an electric double layer capacitor according to the present invention is produced by a method in which an activated carbon and phosphoric acid are kneaded, and after a heating process of conducting heating at 400°C to 600°C is executed, heat treatment in an inert gas atmosphere at 800°C or higher is conducted so as to complex the activated carbon and a phosphorus compound, preferably a method in which an activated carbon raw material and phosphoric acid are kneaded at 130°C to 170°C, conducting molding, and after a first heating process of conducting heating at 100°C to 230°C and a second heating process of conducting heating at 400°C to 600°C are executed, heat treatment in an inert gas atmosphere at 800°C or higher is conducted so as to complex the activated carbon and a phosphorus compound, and more preferably a method in which after the heating process at 400°C to 600°C, a steam treatment process of conducting heating in a steam atmosphere at 500°C to 900°C is executed and subsequently, heat treatment in an inert gas atmosphere at 800°C or higher is conducted so as to complex the activated carbon and a phosphorus compound. Further preferably, a hot water washing treatment is conducted between the second heating process and the steam treatment process. Furthermore, after the heat treatment in an inert gas atmosphere, pulverization is conducted, if necessary.

A preferable method for producing the phosphorus compound-complexed activated carbon according to the present invention will be described below on a process basis.

<Kneading process of activated carbon or activated carbon raw material and phosphoric acid>

Preferably, the phosphorus compound-complexed activated carbon for an electric double layer capacitor according to the present invention is produced by using an activated carbon or an activated carbon raw material as a raw material. Most of all, at least one type of the above-described wood based raw material can be used favorably.

As for phosphoric acid, industrially mass-produced orthophosphoric acid is preferable. When this orthophosphoric acid is heated, pyrophosphoric acid, tripolyphosphoric acid, and metaphosphoric acid are produced. A phosphoric acid aqueous solution containing these compounds is also used favorably. Regarding the concentration, 70 to 85 percent by weight phosphoric acid aqueous solution in terms of orthophosphoric acid is used favorably.

Regarding the blend ratio of phosphoric acid to the activated carbon or the activated carbon raw material, in contrast to common activation with phosphoric acid, it is preferable that the amount of blend of phosphoric acid is low. For example, it is preferable that phosphoric acid (in terms of pure component)/activated carbon raw material, e.g., wood based powder, (dry weight) is specified to be 0.6 to 1.3 and, further preferably, this value is 0.6 to 1.2. If this value is too large, variations occur so that large pores tend to generate, and the capacitance decreases. If the value is too small, the dehydration action of phosphoric acid becomes unsatisfactory and a condensation reaction of organic substances does not proceed satisfactorily.

The kneading method is not specifically limited, and kneaders and other common kneading machines can be used.

Preferably, the kneading temperature is 130°C to 170°C, and it is enough that kneading is conducted in the air for about 30 minutes.

After the kneading, it is preferable that molding into the shape of pellets having a diameter of, for example, 2 to 5 mm is conducted by using an extruder.

<First heating process>

In this process, the condensation reaction of organic substances proceeds on the basis of intense dehydration due to phosphoric acid.

The kneaded product obtained in the kneading process, preferably a molded product prepared by molding the kneaded product, is heated to 100°C to 230°C in the first heating process.

This first heating process is executed by keeping preferably in the air at 110°C to 220°C, for 3 to 48 hours, preferably 6 to 36 hours, and further preferably 10 to 30 hours. In this temperature range, the temperature may be constant, or be changed, for example, raised.

Regarding the heating system, a common drier may be used, but it is preferable that an external heating type rotary kiln is used.

<Second heating process>

This process is a chemical agent activation process by using phosphoric acid, and is characterized in that carbonization occurs together with activation.
The heat-treated product which has passed the first heating process is subsequently heated in an atmosphere of inert gas, e.g., nitrogen, or an atmosphere of combustion exhaust gas to 400°C to 600°C, preferably 450°C to 550°C and is kept for about 15 minutes to 2 hours in the second heating process.
The heating system is not specifically limited, but it is preferable that an external heating type rotary kiln is used.

<Hot water washing process>

The treated product which has passed the second heating process is subjected to washing with hot water at 80°C or higher, for example, at a temperature of 85°C to 100°C, for 10 to 30 minutes. The weight of hot water is 2 to 5 times the weight of the treated product, and the washing is repeated about 3 to 10 times. After this washing, drying is conducted with a drier.

<Steam treatment process>

The treated product which has passed the washing process is subjected to a steam treatment for the purpose of adjusting the phosphorus content. This steam treatment is executed by heating in a steam atmosphere at 500°C to 900°C for 30 minutes to 4 hours.

<Washing process with alkaline aqueous solution>

The treated product which has passed the steam treatment process is subjected to wash with alkaline aqueous solution for the purpose of reducing metal impurities and adjusting the phosphorus content. The washing with alkaline aqueous solution is executed by immersing the treated product in an about 0.1 to 5 N alkali aqueous solution, e.g., NaOH or KOH, and treating for 30 minutes to 24 hours. It is desirable that the washing is conducted at a treatment temperature of room temperature to 200°C by using an autoclave or the like in accordance with the amount of metal impurities.
After the washing with alkaline aqueous solution, it is desirable that rinsing with water is conducted to the extent that no problem occurs in the following process.

<Acid washing process >

The treated product which has passed the washing with alkaline aqueous solution process is subjected to acid washing for the purpose of reducing metal impurities. The acid washing is executed by immersing the treated product in an about 0.1 to 5 N acid aqueous solution, e.g., hydrochloric acid, nitric acid, or sulfuric acid, and treating for 30 minutes to 24 hours. It is desirable that the washing is conducted at a treatment temperature of room temperature to 100°C in accordance with the amount of metal impurities.
After the acid washing, it is desirable that rinsing with water is conducted to the extent that no problem occurs in the following process.

<Heat treatment process>

The treated product which has passed the steam treatment process is heat treated by keeping in an atmosphere of inert gas, e.g., nitrogen, at 800°C or higher, preferably 850°C or higher, and further preferably 900°C to 1,100°C for 1 hour or more.
The heating system is not specifically limited, but it is preferable that a horizontal tunnel furnace, an external heating type rotary kiln, or the like is used.

<Pulverization process>

If necessary, the phosphorus compound-complexed activated carbon obtained by the heat treatment is pulverized to have a desired particle size, for example, an average particle diameter of 4 to 11 $\mu$m by using a fine pulverizer, e.g., a jet mill.

<Operation in each treatment process>

The kneading process at 130°C to 170°C exerts an effect of increasing the viscosity of the kneaded product so as to facilitate molding.

Subsequently, the first heating process in the air at 100°C to 230°C is executed and, thereby, this long-duration reaction at low temperatures facilitates a gradual dehydration polymerization reaction of phosphoric acid to pyrophosphoric acid to tripolyphosphoric acid and to metaphosphoric acid. As a result, an effect of facilitating a uniform dehydration condensation reaction toward the inside of the activated carbon raw material is exerted.

Subsequently, the second heating process in an inert gas atmosphere at 400°C to 600°C is executed and, thereby, an effect of obtaining heat treated carbon with a well-developed porous body due to intense dehydration action of a phosphoric acid polymer, e.g., polyphosphoric acid, is exerted.

The following hot water washing process, in which washing is conducted with hot water at 80°C or higher, exerts an effect of removing large amounts of remaining phosphate.

It is believed that in the following steam treatment process, in which heating is conducted in a steam atmosphere at 500°C to 900°C, slightly remaining phosphorus oxide is heated to the melting point thereof or higher, crystals which are interspersed are melted, and the activated carbon pore surfaces are coated therewith. At that time, phosphorus oxide excessive to such an extent as to fill pores is removed by hydrolysis through introduction of steam and, thereby, the phosphorus atom content in the resulting phosphorus compound-complexed activated carbon can be adjusted.

The following heat treatment process, in which heating is conducted in an inert gas atmosphere at 800°C or higher, exerts effects of removing oxygen-containing functional groups, which deteriorate the durability and, at the same time, fixing phosphorus compounds, in particular polymers of polyphosphoric acid and phosphorus oxide to the activated carbon firmly.

<Electric double layer capacitor>

The electric double layer capacitor including the phosphorus compound-complexed activated carbon according to the present invention will be described below.

A polarizable electrode formed by using an electrode material primarily composed of the phosphorus compound-complexed activated carbon according to the present invention is produced by a common method and is formed from mainly the phosphorus compound-complexed activated carbon according to the present invention and a binder. However, an electrically conductive substance (electrically conductive agent) may be added in order to provide the electrical conductivity to the electrode.

The phosphorus compound-complexed activated carbon can be molded by previously known methods. For example, a binder, e.g., polytetrafluoroethylene, is added to a mixture of the phosphorus compound-complexed activated carbon and an electrically conductive agent, e.g., acetylene black, mixing is conducted and, thereafter, press-molding is conducted, so that a molded product can be obtained. Alternatively, a coal pitch having a relatively high softening point or a thermosetting resin, e.g., a phenol resin, serving as a binder is added to the phosphorus compound-complexed activated carbon, mixing and molding are conducted, the product is heat treated in an inert gas atmosphere to the thermal decomposition temperature of the binder or higher and, thereby, a molded product can also be obtained. Furthermore, it is also possible to sinter merely the phosphorus compound-complexed activated carbon through spark plasma sintering or the like so as to prepare a polarizable electrode without using an electrically conductive agent nor a binder. Moreover, in molding of such a polarizable electrode, if necessary, a collector is used, and an electrode can be molded on the collector as well.

The polarizable electrode according to the present invention may be any one of a thin coating film, a sheet-shaped or tabular molded product, and furthermore a tabular molded product composed of a composite.

By the way, the phosphorus compound-complexed activated carbon can be pulverized into a desired granular state prior to the mixing with the binder. However, the phosphorus compound-complexed activated carbon, the particle diameter of which remaining relatively large, may be mixed with the binder and pulverized together, so that a mixed slurry or a dry mixed pulverized product can be obtained.

As for the electrically conductive agent used for the polarizable electrode, at least one type of electrically conductive agent selected from the group consisting of carbon black, e.g., acetylene black and Ketjenblack, natural graphite, thermal expansion graphite, carbon fiber, carbon nanotube, and metal fibers of ruthenium oxide, titanium oxide, aluminum, nickel, and the like is preferable. In particular, acetylene black and Ketjenblack are preferable from the viewpoint that the electrical conductivity is improved effectively by a small amount thereof. The amount of blend with the phosphorus compound-complexed activated carbon is changed depending on the bulk density of the phosphorus compound-complexed activated carbon. If the amount of blend is too large, the proportion of phosphorus compound-complexed activated carbon decreases and the volume decreases. Therefore, preferably, the amount of blend is specified to be 5 percent by weight or more, in particular 10 percent by weight or more, and 50 percent by weight or less, in particular 30 percent by weight or less of the weight of phosphorus compound-complexed activated carbon.

As for the binder, preferably, at least one type of polytetrafluoroethylene, polyvinylidene fluoride, carboxycellulose, methylcellulose, fluoroolefin copolymer cross-linked polymer, polyvinyl alcohol, polyacrylic acid, polyimide, petroleum pitch, coal pitch, and phenol resin is used. In the case where the binder is used, it is preferable that the amount of blend thereof is 0.5 percent by weight or more, in particular 1 percent by weight or more, and 30 percent by weight or less, in particular, 10 percent by weight or less relative to the phosphorus compound-complexed activated carbon. If the amount of blend of the binder is too large, the electrical resistance value of the electrode increases and, therefore, the capacitance decreases. If the amount of blend is too small, the activated carbon cannot be molded into an electrode form.

In the case where the electric charge collector is used, the material for the electric charge collector is not specifically limited insofar as the material has the electrochemical corrosion resistance and the chemical corrosion resistance. For example, as for the positive electrode, stainless steel, aluminum, titanium, tantalum, and the like are mentioned. As for the negative electrode, stainless steel, nickel, aluminum, copper, and the like are used favorably.

As for the electrolytic solution of the electric double layer capacitor, a nonaqueous electrolytic solution is preferable. As for a solute of the nonaqueous electrolytic solution, salts in which a quaternary onium cation represented by $R_4N^+$, $R_4P^+$ (where R is an alkyl group represented by $C_nH_{2n+1}$: n = 1 to 4), triethylmethylammonium ion, or the like and an anion, e.g., $BF^{4-}$, $PF^{6-}$, $ClO^{4-}$, $SbF^{6-}$, $CF_3SO_3^-$, or the like are combined, a lithium salt in which the cation is a lithium ion relative to these anions, or the like can be used. As for the lithium salt, at least one substance selected from $LiBF_4$, $LiClO_4$, $LiPF_6$, $LiSbF_6$, $LiAsF_6$, $LiCF_3SO_3$, $LiC(CF_3SO_2)_3$, $LiB(C_6H_5)_4$, $LiC_4F_9SO_3$, $LiC_8F_{17}SO_3$, and $LiN((CF_3SO_2)_2$ is preferable. In particular, a salt in which $R_4N^+$ (where R is an alkyl group represented by $C_nH_{2n+1}$: n = 1 to 4) or triethylmethylammonium ion serving as a cation and $BF^{4-}$, $PF^{6-}$, $ClO^{4-}$, or $SbF^{6-}$ serving as an anion are combined is preferable.

The solute concentration in the nonaqueous electrolytic solution is preferably 0.3 mol/liter or more, in particular 0.7 mol/liter or more, and preferably 2.0 mol/liter or less, in particular 1.9 mol/liter or less in order that the characteristics of the electric double layer capacitor can be derived satisfactorily. In this concentration range, high electrical conductivity can be obtained favorably. If the concentration exceeds 2.0 mol/liter, unfavorably, the electrical conductivity of the electrolytic solution is reduced particularly in charge and discharge at low temperatures of -20°C or lower. If the concentration is less than 0.3 mol/liter, unfavorably, the electrical conductivity is low at both of room temperature and low temperatures.

The solvent of the nonaqueous electrolytic solution is not specifically limited. However, an organic solvent composed of at least one type selected from propylene carbonate, ethylene carbonate, butylene carbonate, dimethyl carbonate, methyl ethyl carbonate, diethyl carbonate, sulfolane, methylsulfolane, γ-butyrolactone, γ-valerolactone, N-methyloxazolidinone, dimethylsulfoxide, and trimethylsulfoxide is preferable. In particular, an organic solvent composed of at least one type selected from propylene carbonate, ethylene carbonate, butylene carbonate, dimethyl carbonate, methyl ethyl carbonate, diethyl carbonate, sulfolane, methylsulfolane, and γ-butyrolactone is preferable from the viewpoint of excellent electrochemical stability, chemical stability, and electrical conductivity. However, high melting point solvents, e.g., ethylene carbonate, become solid at low temperatures and, therefore, cannot be used alone. Consequently, it is necessary that the high melting point solvents are made into mixed solvents with low melting point solvents, e.g., propylene carbonate.

As for the electrolytic solution, in particular, a propylene carbonate solution of triethylmethylammonium tetrafluoroborate ($(C_2H_5)_3CH_3NBF_4$) or tetraethylammonium tetrafluoroborate ($(C_2H_5)_4NBF_4$), particularly a propylene carbonate solution of $(C_2H_5)_3CH_3NBF_4$ is preferable. Preferably, the concentration of $(C_2H_5)_3CH_3NBF_4$ is 0.7 mol/liter or more, and 1.5 mol/liter or less. Preferably, the concentration of $(C_2H_5)_4NBF_4$ is 0.5 mol/liter or more, and 1.0 mol/liter or less.

Furthermore, preferably, the water content in the nonaqueous electrolytic solution is specified to be 200 ppm or less, and furthermore 50 ppm or less in such a way that high voltage resistance can be obtained.

EXAMPLES

The present invention will be further described below in detail with reference to specific examples. However, the present invention is not limited by the following examples unless the gist thereof is exceeded.

[Examples 1, 2, 3, and 4, Comparative examples 1 and 2]

<Production of phosphorus compound-complexed activated carbon and measurement of properties>

i) Production of phosphorus compound-complexed activated carbon

Sawdust of wood including cryptomeria and 85 percent by weight phosphoric acid aqueous solution was mixed in such a way that phosphoric acid (pure component)/sawdust (weight ratio) became as shown in Table 1, kneading was conducted at 130°C to 170°C for 30 minutes and, thereafter, molding into pellets having diameters of 2 to 3 mm was conducted with a pelletizer. The pellets were subjected to primary heating in the air at a temperature shown in Table 1 for 20 hours. Subsequently, the temperature was further raised to a temperature shown in Table 1 in an inert gas atmosphere (nitrogen) and secondary heating was conducted for 30 minutes.

After cooling, the resulting carbon activated by phosphoric acid was washed with hot water at 90°C for 15 minutes. The amount of hot water was 3 times the activated carbon, and the washing was repeated 5 times. After the hot water washing, drying was conducted with a drier at 110°C.

Subsequently, heating was conducted in a steam atmosphere at a temperature shown in Table 1 (although the steam treatment was not conducted in Comparative example 1) and, thereafter, heat treatment was conducted in a rotary kiln, through which a nitrogen gas was passed, at 850°C for 1 hour.

By the way, in Examples 3 and 4, after the above-described steam treatment, the treated product was immersed in a 1 N NaOH aqueous solution, alkali washing was conducted in an autoclave at 8 kgf/cm$^2$ (7.8 × 10$^2$ KPa) and 180°C for 10 hours. After the alkali washing, water washing was conducted satisfactorily. Subsequently, the treated product was immersed in a 1 N HCl aqueous solution at 80°C for 1 hour. This HCl washing was repeated 3 times. Thereafter, washing was conducted with large amounts of water, drying was conducted at 115°C, and subsequently, heat treatment was conducted in a rotary kiln, through which a nitrogen gas was passed, at 850°C for 1 hour.

The resulting heat-treated product was pulverized so as to obtain phosphorus compound-complexed activated carbon having an average particle diameter of about 10 μm.

[Table 1]

| | Phosphoric acid/sawdust (weight ratio) | Primary heating temperature (° C) | Secondary heating temperature (° C) | Steam treatment temperature (° C) | Alkali cleaning | Hydrochloric acid cleaning |
|---|---|---|---|---|---|---|
| Example 1 | 1.2 | 120 | 500 | 700 | none | none |
| Example 2 | 1.2 | 120 | 500 | 900 | none | none |
| Example 3 | 1.2 | 140 | 450 | 500 | conducted | conducted |
| Example 4 | 0.9 | 140 | 450 | 500 | conducted | conducted |
| Comparative example 1 | 1.6 | 120 | 550 | none | none | none |
| Comparative example 2 | 1.6 | 120 | 550 | 400 | none | none |

ii) Measurement of properties of phosphorus compound-complexed activated carbon

The BET specific surface area, the total pore volume, and the pore distribution of the resulting phosphorus compound-complexed activated carbon were calculated on the basis of an adsorption isotherm of the activated carbon obtained by measuring each amount of nitrogen gas equilibrium adsorption of the activated carbon powder under each relative pressure at a liquid nitrogen temperature by using Sorptmatic 1990 (produced by Carlo Erba Instruments). The average pore diameter of the activated carbon was calculated by the following equation on the basis of the total pore volume and the BET specific surface area determined from the above-described nitrogen gas adsorption isotherm assuming that the pore shape of the activated carbon is cylindrical.

$$\text{average pore diameter (nm)} = \text{total pore volume (cm}^3/\text{g)} / \text{specific surface area (m}^2/\text{g)} \times 4000$$

Furthermore, the phosphorus atom content in the activated carbon was determined as described below. The activated carbon powder was heated and dissolved with concentrated nitric acid, concentrated sulfuric acid and the phosphorus content of the resulting solution was determined with an ICP emission spectrometer, and the phosphorus atom content in the activated carbon was determined.

Moreover, the amount of ash in the activated carbon was determined as described below.

The activated carbon powder was put into a chinaware crucible, and heating was conducted in the air at 815°C for 5 hours or more. After cooling, the mass of the remaining ash was measured, the weight percentage relative to the amount of activated carbon put into the crucible was determined, and the amount of ash was determined.

The results thereof are shown in Table 2.

[Table 2]

| | BET specific surface area $(m^2/g)$ | 1.4 to 2.0 nm pore volume $(cm^3/g)$ | Average pore diameter (nm) | Phosphorus atom content (ppm) | Amount of ash (percent by weight) |
|---|---|---|---|---|---|
| Example 1 | 1900 | 0.36 | 1.94 | 7000 | 2.5 |
| Example 2 | 2150 | 0.35 | 1.98 | 4500 | 2.2 |
| Example 3 | 1770 | 0.22 | 1.84 | 6000 | 1.3 |
| Example 4 | 1730 | 0.28 | 1.84 | 3500 | 1.1 |
| Comparative example 1 | 1650 | 0.22 | 2.34 | 27000 | 5.3 |
| Comparative example2 | 1740 | 0.23 | 2.36 | 16000 | 4.0 |

<Production of electric double layer capacitor and evaluation of initial performance>

i) Production of electric double layer capacitor

Each of the phosphorus compound-complexed activated carbons obtained in Examples 1 to 4 and Comparative examples 1 and 2 was used. A mixture composed of 80 percent by weight of phosphorus compound-complexed activated carbon, 10 percent by weight of acetylene black, and 10 percent by weight of polytetrafluoroethylene was kneaded. Thereafter, a tablet forming machine (produced by JASCO Corporation) was used, press-molding was conducted with oil hydraulic press at a pressure of 50 kgf/cm$^2$ (4.9 MPa) in such a way that the diameter became 10 mm and the thickness became 0.5 mm so as to obtain a disk-like molded product, and this was served as a positive electrode molded product. In the same manner, another molded product was further prepared and this was served as a negative electrode molded product. The resulting two molded products were dried at 110°C for 2 hours and, thereafter, the weight and the thickness were measured. Subsequently, drying was conducted in a vacuum of 0.1 torr (13.3 Pa) or less at 300°C for 3 hours. After the dried two molded products were transferred into a dry box in a nitrogen atmosphere, the molded products serving as the positive and the negative electrodes were vacuum-impregnated with a propylene carbonate solution of triethylmethylammonium tetrafluoroborate $((C_2H_5)_3CH_3NBF_4)$ having a concentration of 1.3 mol/liter and serving as an electrolytic solution. Next, the positive electrode molded product and the negative electrode molded product impregnated with the electrolytic solution were opposed with a polyethylene separator therebetween and were sandwiched between two platinum electrode plates. They were sandwiched between two Teflon (registered trade mark) plates so as to be fixed. The thus formed electrodes and the electrolytic solution were put into a beaker, the electrodes were immersed into the electrolytic solution and, thereby, a beaker type electric double layer capacitor was obtained.

ii) Evaluation of electric double layer capacitor

A voltage of 2.8 V was applied to the resulting beaker type electric double layer capacitor in a constant temperature bath at 25°C with HJ-201 BATTERY CHARGE/DISCHARGE UNIT (produced by HOKUTO DENKO CORPORATION). Thereafter, constant current discharge was conducted at a current density of 1 mA/cm$^2$. The initial capacitance (F) was determined from the gradient between 2.8 V and 1.0 V of the resulting discharge curve, and the capacitance per unit volume (F/cc) was determined on the basis of the weight and the density of the electrode. The results thereof are shown in Table 3.

[Table 3]

|  | Capacitance (F/cc) |
| --- | --- |
| Example 1 | 18.0 |
| Example 2 | 17.6 |
| Example 3 | 19.8 |
| Example 4 | 18.6 |
| Comparative example 1 | 12.6 |
| Comparative example 2 | 12.3 |

As is clear from Table 3, the electric double layer capacitor including the phosphorus compound-complexed activated carbon according to the present invention as an electrode material has a large capacitance.

<Production of electric double layer capacitor and evaluation of durability>

i) Production of electric double layer capacitor

Each of the phosphorus compound-complexed activated carbons obtained in Examples 3 and 4 and Comparative example 1 was used. A mixture composed of 80 percent by weight of phosphorus compound-complexed activated carbon, 10 percent by weight of acetylene black, and 10 percent by weight of polytetrafluoroethylene was kneaded. Thereafter, a tablet forming machine (produced by JASCO Corporation) was used, press-molding was conducted with oil hydraulic press at a pressure of 50 kgf/cm$^2$ (4.9 MPa) in such a way that the diameter became 10 mm and the thickness became 0.5 mm so as to obtain a disk-like molded product, and this was served as a positive electrode molded product. In the same manner, another molded product was further prepared and this was served as a negative electrode molded product. The resulting two molded products were dried at 110°C for 2 hours and, thereafter, the weight and the thickness were measured. Subsequently, drying was conducted in a vacuum of 0.1 torr (13.3 Pa) or less at 300°C for 3 hours. After the dried two molded products were transferred into a dry box in a nitrogen atmosphere, the molded products serving as the positive and the negative electrodes were vacuum-impregnated with a propylene carbonate solution of triethylmethylammonium tetrafluoroborate (($C_2H_5$)$_3CH_3NBF_4$) having a concentration of 1.3 mol/liter and serving as an electrolytic solution. Next, the positive electrode molded product and the negative electrode molded product impregnated with the electrolytic solution were opposed with a polyethylene separator therebetween. Subsequently, they were encapsulated in a stainless steel coin cell by caulking and, thereby, a coin cell type electric double layer capacitor was obtained.

ii) Evaluation of electric double layer capacitor

A voltage of 2.8 V was applied to the resulting coin cell type electric double layer capacitor in a constant temperature bath at 70°C with HJ-201 BATTERY CHARGE/DISCHARGE UNIT (produced by HOKUTO DENKO CORPORATION). Thereafter, constant current discharge was conducted at a current density of 10 mA/cm$^2$. The initial capacitance (F) was determined from the resulting discharge curve. Subsequently, after 2.8 V was continuously applied for 500 hours, discharge was conducted and the capacitance (F) after a durability test was determined. The rate of change (%) of the capacitance after the durability test relative to the initial capacitance was determined. The results thereof are shown in Table 4.
[Table 4]

|  | Initial capacitance (F) | Capacitance after 500 hours (F) | Rate of change (%) |
| --- | --- | --- | --- |
| Example 3 | 2.32 | 2.09 | 90 |
| Example 4 | 2.20 | 2.00 | 91 |
| Comparative example 1 | 1.51 | 1.19 | 79 |

As is clear from Table 4, the electric double layer capacitor including the phosphorus compound-complexed activated carbon according to the present invention exhibited small rate of change of the capacitance after 500 hrs and, therefore, has excellent durability.

Industrial Applicability

The electric double layer capacitor produced by using the phosphorus compound-complexed activated carbon for an electric double layer capacitor according to the present invention has a high capacitance and excellent durability and is useful for various applications, e.g., hybrid automobiles (assist power source and brake backup), automobile idling stop, electric automobiles, uninterruptible power sources, and momentary voltage drop compensators.
By the way, the present invention contains subject matters related to Japanese Patent Application No. 2006-164993 filed on June 14, 2006 and Japanese Patent Application No. 2007-117120 filed on April 26, 2007, the entire contents of which are incorporated herein by reference.

**Claims**

1.   A phosphorus compound-complexed activated carbon for an electric double layer capacitor, the activated carbon being used for an electric double layer capacitor and being formed by complexing a phosphorus compound,
wherein the phosphorus atom content in the phosphorus compound-complexed activated carbon is 1,000 ppm or more, and 20,000 ppm or less,
the BET specific surface area is 1,600 $m^2$/g or more, and 2,200 $m^2$/g or less,
the average pore diameter is 1.7 nm or more, and 2.1 nm or less, and
the pore volume of pores having pore diameters within the range of 1.4 nm to 2.0 nm calculated by a Cranston-Inkley method is 0.25 $cm^3$/g or more.

2.   The phosphorus compound-complexed activated carbon for an electric double layer capacitor according to Claim 1, **characterized in that** the electric double layer capacitor is an electric double layer capacitor including a nonaqueous electrolytic solution.

3.   The phosphorus compound-complexed activated carbon for an electric double layer capacitor according to Claim 1, wherein the activated carbon is produced from a wood based raw material.

4.   The phosphorus compound-complexed activated carbon for an electric double layer capacitor according to Claim 1, wherein the ash content is 3.0 percent by weight or less.

5.   A method for producing the phosphorus compound-complexed activated carbon for an electric double layer capacitor according to Claim 1, the method comprising the process of:

kneading an activated carbon and phosphoric acid so as to prepare a mixture;
heating the mixture at 400°C to 600°C in a heating process; and
heat treating the heated mixture in an inert gas atmosphere at 800°C or higher so as to complex the activated carbon and a phosphorus compound in a heat treatment process.

6.   A method for producing the phosphorus compound-complexed activated carbon for an electric double layer capacitor according to Claim 1, the method comprising the process s of:

kneading an activated carbon raw material and phosphoric acid at 130°C to 170°C so as to prepare a mixture;
molding the mixture so as to prepare a molded product;
heating the molded product at 100°C to 230°C in a first heating process;
heating the molded product, which has heated in the first heating process, at 400°C to 600°C in a second heating process; and
heat treating the molded product, which has heated in the second heating process, in an inert gas atmosphere at 800°C or higher so as to complex the activated carbon and a phosphorus compound in a heat treatment process.

7.   The method for producing the phosphorus compound-complexed activated carbon for an electric double layer capacitor, according to Claim 5, the method further comprising the process of heating the heated molded product in a steam atmosphere at 500°C to 900°C in a steam treatment process after the heating process and before the heat treatment process.

8. The method for producing a phosphorus compound-complexed activated carbon for an electric double layer capacitor, according to Claim 6, the method further comprising the process of heating the heated molded product in a steam atmosphere at 500°C to 900°C in a steam treatment process after the second heating process and before the heat treatment process.

9. An electric double layer capacitor including the phosphorus compound-complexed activated carbon according to Claim 1.

<div align="center">

**INTERNATIONAL SEARCH REPORT**

</div>

| | International application No. |
|---|---|
| | PCT/JP2007/060337 |

| A. CLASSIFICATION OF SUBJECT MATTER |
|---|
| *H01G9/058*(2006.01)i, *C01B31/04*(2006.01)i |

According to International Patent Classification (IPC) or to both national classification and IPC

| B. FIELDS SEARCHED |
|---|
| Minimum documentation searched (classification system followed by classification symbols) |
| H01G9/058, C01B31/04 |

| Documentation searched other than minimum documentation to the extent that such documents are included in the fields searched |
|---|
| Jitsuyo Shinan Koho          1922-1996    Jitsuyo Shinan Toroku Koho   1996-2007 |
| Kokai Jitsuyo Shinan Koho    1971-2007    Toroku Jitsuyo Shinan Koho   1994-2007 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| X | JP 2006-089349 A  (Sumitomo Bakelite Co., Ltd.), 06 April, 2006 (06.04.06), Par. Nos. [0002], [0019] to [0020], [0023] to [0028], [0038], [0056] (Family: none) | 1-4,9 |
| A | JP 61-173459 A  (Kuraray Chemical Co., Ltd.), 05 August, 1986 (05.08.86), Page 3, lower right column, lines 4 to 11 (Family: none) | 1-9 |
| A | JP 2001-058808 A  (Kureha Chemical Industry Co., Ltd.), 06 March, 2001 (06.03.01), Par. No. [0021] (Family: none) | 1-9 |

| ☐ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 06 August, 2007 (06.08.07) | 21 August, 2007 (21.08.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**EP 2 031 612 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6043183 A
- US 5905629 A
- JP 2006164993 A
- JP 2007117120 A